# EUROPÄISCHE PATENTSCHRIFT

(11) **EP 0 568 654 B1**
(45) Veröffentlichungstag und Bekanntmachung des Hinweises auf die Patenterteilung: **10.04.1996**
(21) Anmeldenummer: 92915600.8
(22) Anmeldetag: 15.07.1992
(51) Int. Cl.: F16L 23/12

(54) **FLANSCHPROFIL ZUM AUFSTECKEN AUF STOSSRÄNDER VON LUFTKANALELEMENTEN**
FLANGE SECTION FOR FITTING ON THE MATING EDGES OF AIR DUCT COMPONENTS
PROFILE A SEMELLES DESTINE A ETRE POSE SUR LES JOINTS D'ELEMENTS DE CONDUITES D'AIR

(30) Priorität: 26.11.1991 DE 9114679 U
(43) Veröffentlichungstag der Anmeldung: 10.11.1993
(73) Patentinhaber: GEBHARDT-STAHL-GMBH, W-32107 Werl (DE)
(72) Erfinder: GEBHARDT, Manfred, D-4773 Möhnsee-Körbecke (DE); GEBHARDT, Magret, D-4760 Werl (DE)
(74) Vertreter: Patentanwälte Meinke, Dabringhaus und Partner
(86) Internationale Anmeldenummer: EP9201600
(87) Internationale Veröffentlichungsnummer: WO9311385

(56) Entgegenhaltungen:
- EP-A- 0 354 627
- EP-A- 0 441 570
- DE-A- 2 750 110

## Beschreibung

Die Erfindung richtet sich auf ein Flanschprofil zum Aufstecken auf Stoßränder von Luftkanalelementen und zur Aufnahme von Eckwinkeln zur Bildung eines Montagerahmens, wobei das Flanschprofil guerschnittlich im wesentlichen Lförmig ausgebildet ist, wobei ein L-Schenkel als einseitig offener, doppelwandiger Aufsteckschenkel zum Übergreifen der Randbereiche der Luftkanalelemente und der andere Profilschenkel als Hohlkammer zur Aufnahme eines Eckwinkelschenkels profiliert ist, wobei der als Hohlkammer ausgebildete Profilschenkel einen in der Gebrauchslage zur Trennfugenebene gewandten Wandbereich und einen davon abgewandten Wandbereich aufweist.

Die Erfindung geht aus von einem Flanschprofil, wie es in der DE-A 27 50 110 vorbeschrieben ist. Das dortige Profil weist ausgehend von der Trennfugenebene eine Rückfalzung der dortigen Profilschenkelwand auf, wobei die gegenüberliegende, abgewandte Profilschenkelwand vom Kopfbereich zum Fuß schräg angestellt ist. Der eingeschobene Eckwinkel ist großflächig querschnittlich Z-förmig gestaltet, um Fixier- und Anlagepunkte innerhalb des so entstandenen Einschubrah-mens des Profiles zu erreichen. Das dortige Profil macht damit einen sehr aufwendig gestalteten Eckwinkel notwendig, was unter Kostengesichtspunkten äußerst nachteilig ist. Diesen Nachteil vermeidet ein Profil nach der EP-A 0 085 355 bzw. DE-A 3203204. Das dortige Profil zeichnet sich insbesondere durch hohe Dichtigkeit aus mit dem gleichzeitigen Vorteil, daß keinerlei Falzungen, Rücksprünge, Unebenheiten u. dgl. in dem unmittelbar in der Trennfugenebene liegenden Profilbereich vorgesehen sind, so daß hier problemlos Dichtmaterialien aufgelegt bzw. zwischengelegt werden können.

Es gibt Einsatzfälle, in denen besonders hohe Spannkräfte auf Dichtprofile ausgeübt werden, z.B. wenn sehr große Lüftungskanalschüsse miteinander verschraubt werden, hier werden die häufig mit Profilnasen versehenen Außenbereiche der Luftkanalprofile verklammert. Werden damit vergleichsweise lange Profile auf die Stirnseiten aufgesteckt und vor dem Aufstecken unsachgemäß behandelt, kann es zu Verdrillungen des Profiles kommen.

Aufgabe der Erfindung ist die Schaffung einer Lösung, mit der insbesondere Verdrillungen langer Profilstücke der gattungsgemäßen Art vermieden werden.

Mit einem Flanschprofil der eingangs bezeichneten Art wird diese Aufgabe gemäß der Erfindung dadurch gelöst, daß der von der Trennfugenebene abgewandte Wandbereich über einen Teilbereich parallel zur Trennfugenebene verläuft, anschließend zum freien Ende des Aufsteckschenkels hin abgewinkelt ausgebildet ist, anschließend auf den in der Trennfugenebene liegenden Wandbereich geführt und durch Rückfalzung um etwa 180° in den auf dem Kanal außen aufliegenden Wandbereich des anderen Profilschenkels übergehend ausgebildet ist, wobei der Schrägverlauf des Teilbereiches etwa in der Mitte der Profilhöhe des Wandbereiches beginnt, wobei der zur Trennfugenebene gewandte Wandbereich glatt und unterbrechungsfrei ausgebildet ist.

Durch die Teilschräge wird erreicht, daß eine Verdrillung über die Länge des Profiles hin vermeiden wird, mit der Schräge können auch größere Verspannkräfte abgefangen werden. Dadurch, daß die Schrägstellung des einen Profilwandbereiches fast etwa mittig erfolgt, ist gewährleistet, daß der Eckwinkel einfach im Profil positioniert werden kann und dort auch problemlos gehalten wird, der der Trennfugenebene zugewandte glatte Wandbereich sorgt für hohe Dichtigkeit.

Bei andersartig gestalteten Profilen sind für sich gesehen abgeschrägte Profilbereiche bereits bekannt. So etwa aus der DE-A 22 21 312, der DE-A 28 36 761 oder der DE-A 33 13 235 bzw. dem Einfachprofil nach DE-A 36 38 618 oder dem DE-U 70 25 770. Profilschrägen zeigt auch die DE-A 21 38 966, die DE-A 24 34 160 oder die EP-A 0 014 123 in einer der dort offenbarten Ausführungsformen, wobei allen bekannten Lösungen, die hier genannt sind, gemeinsam ist, daß sie nicht nach der Gattung gestaltet sind und die an ein gattungsgemäßes Profil gestellten Anforderungen entweder gar nicht oder nur unzureichend erfüllen können.

Daß eine Schrägstellung etwa in der Mitte der Profilhöhe beginnt, ist für sich gesehen beispielsweise aus dem DE-U 70 35 770 oder der EP-A 0 354 627 bekannt.

Um eine hohe Dichtigkeit zu erreichen, sieht die Erfindung auch vor, daß der durch die 180°-Rückfalzunq gebildete Dichtsteg im Übergangsbereich zwischen den beiden L-Schenkeln, wie an sich bekannt, die Innenoberfläche des in der Dichtebene liegenden Profilbereiches berührt.

Die Erfindung ist nachstehend anhand der Zeichnung beispielsweise näher erläutert. Diese zeigt in
- Fig. 1: eine perspektivische Ansicht von benachbarten Flanschprofilen mit dem erfindungsgemäßen Flanschprofil sowie in
- Fig. 2: einen Querschnitt durch ein Flanschprofil nach der Erfindung in vereinfachter Darstellung.

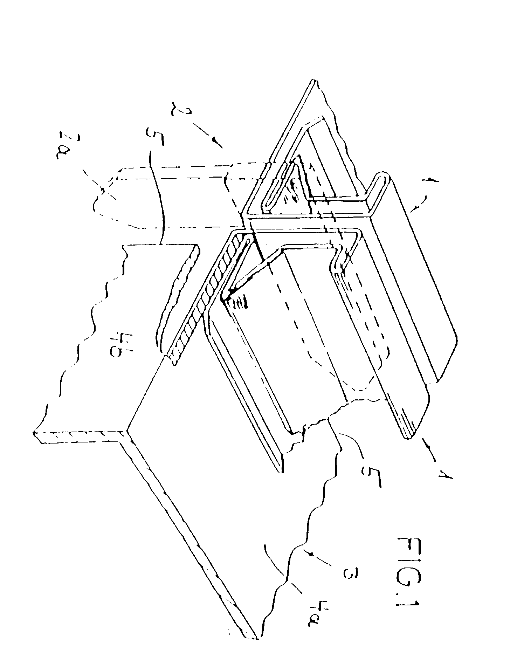

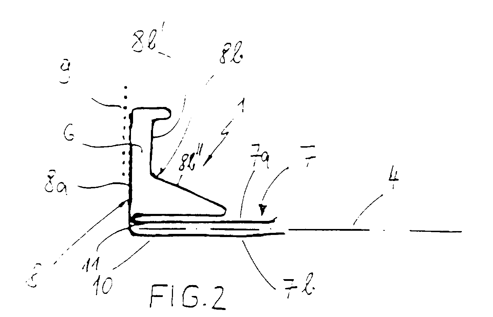

Das in den Figuren allgemein mit 1 bezeichnete Profil dient in Verbindung mit vier in Fig. 1 nur gestrichelt wiedergegebenen Eckwinkeln 2 zur Verbindung von Luftkanalelementen 3. Die Luftkanalelemente 3 bestehen als Blechkastenprofile aus vier Blechwänden, von denen in Fig. 1 nur zwei wiedergegeben sind, die mit 4a und 4b bezeichnet sind. Auf die mit 5 bezeichneten Stirnseiten werden die Profile 1 in der dargestellten Weise aufgeschoben, nachdem die mit 2a bezeichneten Schenkel der Eckwinkel 2 in die entsprechenden, von dem Profil gebildeten Hohlkammern, in Fig. 2 mit 6 bezeichnet, eingeschoben wurden.

Die weitere Befestigung des so vorgefertigten und aufgeschobenen Rahmens ist hier nicht näher beschrieben.

Bezugnehmend auf Fig. 2 ist erkennbar, daß das Flanschprofil 1 querschnittlich etwa L-förmig ausgebildet ist, und zwar mit je einem doppelwandigen Schenkel. Der die Kanalwände 4, in Fig. 2 strichpunktiert angedeutet, zwischen sich aufnenmende einseitig offene Schenkel ist allgemein mit 7 bezeichnet, der oben auf dem Kanalblech 4 aufliegende Profilbereich trägt das Bezugszeichen 7a, der unten aufliegende, beim Kanal ist dies die Innenseite, aufliegende Profilbereich trägt das Bezugszeichen 7b. Der die Schenkel 2a der Eckwinkel 2 aufnehmende L-Schenkel des Profiles 1 ist allgemein mit 8 bezeichnet, der in der mit Punkten angedeuteten Trennfugenebene 9 liegende Profilbereich trägt das Bezugszeichen 8a, der davon abgewandte das Bezugszeichen 8b.

Wie sich aus Fig. 2 ergibt, ist der Profilbereich 8b zweigeteilt, er weist ein parallel zur Trennfugenebene 9 verlaufenden Teilbereich 8b' und einen davon weggewinkelten schrägverlaufenden Teilbereich 8b" auf. Am Ende der Schräge des Teilbereiches 8b" findet sich eine Profilrückfalzung auf die Trennfugenebene 9 zuweisend, dieses Profilstück ist in Fig. 2 mit 10 bezeichnet, es geht in den Profilbereich 7a durch eine Umfalzung um 180° unter Bildung einer Lichtnase 11 über.

## Patentansprüche

1. Flanschprofil (lj zum Aufstecken auf Stoßränder von Luftkanalelementen (4) und zur Aufnahme von Eckwinkeln (2) zur Bildung eines Montagerahmens, wobei das Flanschprofil querschnittlich im wesentlichen L-förmig ausgebildet ist, wobei ein L-Schenkel als einseitig offener, doppelwandiger Aufsteckschenkel (7) zum Übergreifen der Randbereiche der Luftkanalelemente und der andere Profilschenkel (8) als Hohlkammer zur Aufnahme eines Eckwinkelschenkels profiliert ist, wobei der als Hohlkammer ausgebildete Profilschenkel (8) einen in der Gebrauchslage zur Trennfugenebene (9) gewandten Wandbereich (8a) und einen davon abgewandten Wandbereich (8b) aufweist,
dadurch gekennzeichnet,
daß der von der Trennfugenebene (9) abgewandte Wandbereich (8b) über einen Teilbereich (8b') parallel zur Trennfugenebene (9) verläuft, anschließend zum freien Ende des Aufsteckschenkels (7) hin abgewinkelt (8b") ausgebildet ist, anschließend auf den in der Trennfugenebene liegenden Wandbereich geführt und durch Rückfalzung um etwa 180° in den auf dem Kanal (3) außen aufliegenden Wandbereich (7a) des anderen Profilschenkels (7) übergehend ausgebildet ist, wobei der Schrägverlauf des Teilbereiches (8b") etwa in der Mitte der Profilhöhe des Wandbereiches (8b) beginnt, wobei der zur Trennfugenebene (9) gewandte Wandbereich (8a) glatt und unterbrechungsfrei ausgebildet ist.

2. Vorrichtung nach Anspruch 1,
dadurch gekennzeichnet,
daß der durch die 180°-Rückfalzung gebildete Dichtsteg (11) im Übergangsbereich zwischen den beiden L-Schenkeln (7,8), die Innenoberfläche des in der Dichtebene liegenden Profilbereiches (8a) berührt.

## Claims

1. A flange section (1) for fitting on to abutting edges of air duct elements (4) and for receiving corner angle members (2) for forming an assembly frame, wherein the flange section is of a substantially L-shaped configuration in cross-section, wherein one limb of the L-shape is profiled as a double-wall push-on limb (7) which is open at one side for engaging over the edge regions of the air duct elements and the other section limb (8) is profiled as a hollow chamber for receiving a corner angle member limb, and wherein the section limb (8) which is in the form of the hollow chamber has a wall region (8a) which in the position of use is towards the separation plane (9) and a wall region (8b) which faces away therefrom, characterised in that the wall region (8b) which faces away from the separation plane (9) extends over a portion (8b') thereof parallel to the separation plane (9), it is then of a configuration which is angled (8b") towards the free end of the push-on limb (7), it is then passed on to the wall region which lies in the separation plane, and it is arranged by being bent back through about 180° to extend into the wall region (7a), which lies on the duct (3) on the outside thereof, of the other section limb (7), wherein the inclined positioning of the portion (8b") begins approximately at the middle of the section height of the wall region (8b), and wherein the wall region (8a) which is towards the separation plane (9) is of a smooth and interruption-free nature.

2. Apparatus according to claim 1 characterised in that the sealing web portion (11) which is formed by the 180°-bend, in the transitional region between the two limbs (7, 8) of the L-shape, touches the inside surface of the section region (8a) which lies in the sealing plane.

## Revendications

1. Profilé de bride (1) destiné à être emboîté sur les bords d'éléments de conduits d'air (4) et à recevoir des équerres (2) pour former un cadre de montage; le profilé de bride forme essentiellement un L dans une vue en coupe ; une branche en L est profilée comme branche à emboîter (7) ouverte d'un côté et à double parois pour recouvrir les régions de bord des éléments de conduits d'air et l'autre branche de profilé (8) en profilée comme cavité pour recevoir une branche d'équerre ; la branche du profilé (8) formée comme cavité présente, en position d'utilisation, une région de paroi (8b) tournée vers le plan de joint (9) et une région de paroi (8b) détournée dudit plan,
caractérisé en ce que
la région de paroi (8b) détournée du plan de joint (9) s'étend sur une région partielle (8b') parallèle au plan de joint (9) et forme ensuite un angle vers le bout libre de la branche à emboîter (7) ; ladite région est amenée ensuite dans la région de paroi se trouvant dans le plan de joint et est formée, par un repliage de 180°, de manière telle à passer dans la région de paroi (7a) de l'autre branche de profilé (7) appliquée à l'extérieur sur le conduit (3); l'inclinaison de la région partielle (8b") débute environ au milieu de la hauteur du profilé de la région de paroi (8b) ; ladite région de paroi (8a) orientée vers le plan de joint (9) est lisse et ininterrompue.

2. Dispositif selon la revendication 1,
caractérisé en ce que
le pont d'étanchéité (11) formé par un repliage de 180° touche dans la région de transition entre les deux branches en L (7,8), la surface intérieure de la région de profilé (8a) située dans le plan d'étanchéité.
